# FASCICULE DE BREVET EUROPEEN

(11) **EP 3 767 261 B1**
(45) Date de publication et mention de la délivrance du brevet: **19.07.2023**
(21) Numéro de dépôt: 20186336.2
(22) Date de dépôt: 16.07.2020
(51) Int. Cl.: G01J 5/34, G06V 40/13

(54) **CAPTEUR DE MOTIF THERMIQUE AVEC MATRICE DE PIXELS AVEC LIGNES DE CHAUFFE EN SERPENTIN**
WÄRMEMUSTERSENSOR MIT PIXELMATRIX MIT HEIZSCHLANGEN
THERMAL PATTERN SENSOR WITH PIXEL MATRIX WITH HEATING LINES IN COIL

(30) Priorité: 18.07.2019 FR 1908169
(43) Date de publication de la demande: 20.01.2021
(73) Titulaire: Idemia Identity & Security France, 92400 Courbevoie (FR); Commissariat à l'Energie Atomique et aux Energies Alternatives, 75015 Paris (FR)
(72) Inventeur: FOURRE, Joël-Yann, 92400 Courbevoie (FR); MAINGUET, Jean-François, 38054 Grenoble Cedex 09 (FR)
(74) Mandataire: Regimbeau

(56) Documents cités:
- EP-A1- 0 840 250
- EP-A1- 3 276 585
- EP-A1- 3 483 787
- EP-A1- 3 492 894
- EP-A1- 3 502 639
- FR-A1- 3 044 408
- FR-A1- 3 044 409
- FR-A1- 3 069 938

## Description

### DOMAINE TECHNIQUE GENERAL

L'invention concerne un capteur de motif thermique, par exemple un capteur d'empreintes digitales, réalisant une détection thermique active et comprenant une matrice de pixels. L'invention concerne plus particulièrement une matrice passive de pixels pour un tel capteur, c'est-à-dire sans élément actif de sélection ou d'amplification (comme une diode ou un transistor) pour chaque pixel, mais peut également s'appliquer à une matrice active de pixel.

### ETAT DE LA TECHNIQUE

Un capteur d'empreintes digitales comporte des moyens de détection thermique. Ces moyens de détection thermique peuvent correspondre à des éléments pyroélectriques, des diodes, des thermistances ou tout autre élément sensible à la température permettant de convertir une variation de température en une variation de potentiel ou de courant électrique.

On connaît des documents US 6 091 837, EP 2 385 486, EP 3 502 639 et WO 2018/020176 des capteurs d'empreintes digitales dits « actifs » réalisant une détection thermique active et comprenant une matrice passive de pixels.

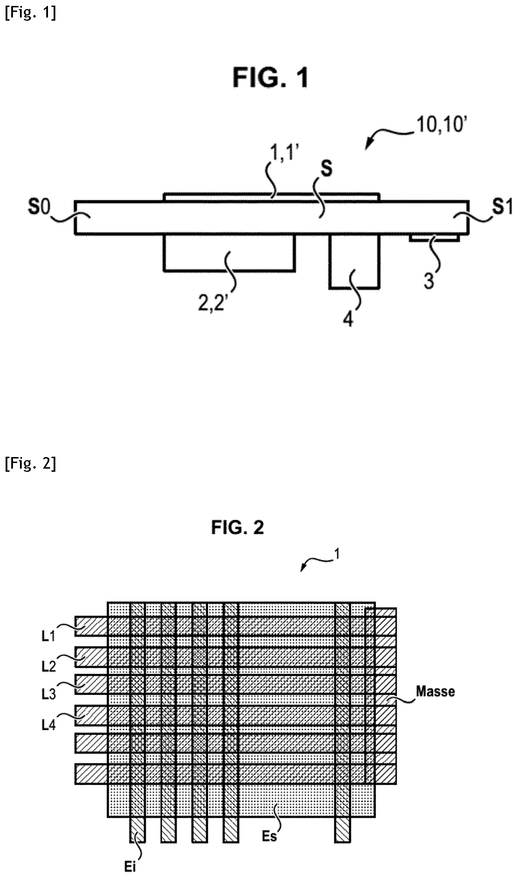

Comme illustré sur la **figure 1****,** un capteur d'empreintes digitales comprend classiquement une surface sensible constituée d'une matrice 1 de pixels disposée sur un support S comprenant une surface inférieure So et une surface supérieure S1.

Chaque pixel comprend une capacité pyroélectrique formée de deux électrodes conductrices entre lesquelles une portion de matériau pyroélectrique est disposée, et un élément chauffant. Cet élément chauffant dissipe une certaine quantité de chaleur dans le pixel et l'échauffement du pixel est mesuré au bout d'un certain temps d'acquisition, appelé temps d'intégration, en présence du doigt sur le capteur. Cela permet de distinguer, au niveau de chaque pixel, la présence d'une crête ou d'une vallée de l'empreinte détectée suivant que la chaleur est absorbée par la peau (pixel en présence d'une crête de l'empreinte) ou conservée dans le pixel (pixel en présence d'une vallée de l'empreinte). Cela conduit à une température finale plus faible dans le cas d'un pixel en présence d'une crête, où la chaleur est absorbée par la peau, par rapport à un pixel en présence d'une vallée.

La **figure 2** illustre une vue de dessus d'une matrice de pixels, formant une matrice de plusieurs lignes et de plusieurs colonnes, les lignes étant connectées à la masse.

Dans ce contexte, pour réaliser la lecture des pixels, on a donc des colonnes Ei pour collecter le signal et des lignes L₁, L₂, L₃, L₄ pour chauffer le matériau pyroélectrique en appliquant un potentiel à la ligne. En particulier, les lignes L₁, L₂, L₃, L₄ sont chauffées les unes après les autres pour reconstituer toute l'image de l'empreinte : une ligne est chauffée et la lecture de toutes les colonnes est effectuée et ainsi de suite.

Pour piloter les lignes et lire les signaux électriques sur chaque colonne, le capteur comprend un circuit intégré 2 tel qu'un ASIC (en anglais, « *Application-Specific Integrated Circuit »).*

Le circuit intégré 2 est généralement disposé sous la surface sensible sur la surface opposée du support sur lequel est disposée la surface sensible (c'est-à-dire sur la surface inférieure S0). Ainsi, pour connecter le circuit 2 intégré à l'élément sensible il faut réaliser des vias à travers le support S pour envoyer et récupérer les signaux. De manière classique, la matrice de pixels comprend 128 lignes et 128 colonnes (soit une matrice de 128x128 pixels).

Par conséquent, pour connecter la matrice de pixels au circuit 2 intégré, il faut dessiner des lignes de routage depuis les différentes lignes ou colonne de la matrice de pixels qui doivent tenir sur la surface du support S.

Ceci n'est pas sans problème, car la place disponible sur le support S est limitée et il faut prévoir des vias très petits et des lignes de routage très fines (plus fines que les lignes ou colonnes dont ils sont issus).

Toutefois, avoir des vias de petite taille, nécessite un besoin d'alignement précis entre les deux surfaces du substrat pour que les pistes issues des lignes et des colonnes et celles qui vont vers le circuit intégré soient bien les unes en face des autres. Un tel besoin d'alignement augmente le coût de fabrication du capteur et diminue le rendement de production du capteur.

En outre, si les vias sont petits (150 µm) cela impose d'avoir des lignes de routage plus fines que les lignes ou colonnes dont elles sont issues. Ceci peut être problématique notamment pour le chauffage.

### PRESENTATION DE L'INVENTION

L'invention pallie à au moins un des inconvénients pré-cités.

A cet effet, l'invention propose, un capteur de motif thermique comportant : un support ; une matrice de pixels disposée sur le support ; un circuit intégré disposé sous le support, la matrice de pixels comprenant plusieurs lignes et plusieurs colonnes de pixels, ladite matrice comprenant :
- un élément thermique actif formé par un matériau thermosensible disposé entre une couche inférieure et une couche supérieure, la couche inférieure étant constituée d'une pluralité de premières pistes en matériau électriquement conducteur et s'étendant selon une première direction, lesdites premières pistes formant des colonnes de pixels ;
- un élément chauffant, disposé sur l'élément thermique actif et formant un tracé en forme de serpentin, ledit élément chauffant étant constitué par une pluralité de deuxièmes pistes en matériau électriquement conducteur et est également constitué de tronçons de connexion en matériau électriquement conducteur connectées aux extrémités des deuxièmes pistes, les tronçons de connexion connectant des deuxième pistes entre elles, lesdites deuxièmes pistes s'étendant dans une deuxième direction différente de la première direction et formant des lignes de pixels, les deuxièmes pistes étant connectées à l'exception des première et dernière deuxième pistes, par leurs extrémités respectives à une des extrémités d'une deuxième piste précédente et d'une deuxième piste suivante par l'intermédiaire dédits tronçons de connexion, la première et dernière deuxième pistes ayant une extrémité libre connectée à un tronçon de connexion, ledit circuit de commande étant connecté à la matrice de pixels par des lignes de routage en matériau électriquement conducteur s'étendant depuis chacun des tronçons

L'invention, est avantageusement complétée par les caractéristiques suivantes, prises seules ou en une quelconque de leur combinaison techniquement possible :
- la deuxième direction est perpendiculaire à la première direction.
- la matrice comprend les couches successives suivantes, déposées sur un substrat : une première couche en matériau électriquement conducteur comprenant les premières pistes constituant la première électrode ; une deuxième couche en matériau thermosensible recouvrant les premières pistes et laissant libre au moins une partie des premières pistes ; une troisième couche en matériau électriquement conducteur superposée à la deuxième couche, ladite troisième couche constituant la deuxième électrode ; une quatrième couche en matériau diélectrique superposée à la troisième couche ; une cinquième couche en matériau électriquement conducteur comprenant l'élément chauffant constituée par la pluralité de deuxièmes pistes et les tronçons de connexion ; une sixième couche de protection.
- l'élément thermique actif est une capacité pyroélectrique, ledit matériau thermosensible étant un matériau pyroélectrique, la couche inférieure formant une électrode inférieure et la couche supérieure formant une électrode supérieure.
- l'élément thermique actif est constitué de diodes ou de thermistances ;

- les lignes de routage et les tronçons de connexion sont disposés sur des couches différentes, le contact entre les lignes de routage et les tronçons de connexion étant réalisé par des vias ;
- les lignes de routage et les tronçons de connexion sont réalisés sur la même couche ;
- le circuit intégré est configuré pour mettre chacune des lignes de routage à un potentiel nul, c'est-à-dire à la masse, ou +Vcc afin de permettre le chauffage d'une ou plusieurs deuxième pistes à la fois.
- le circuit intégré est configuré pour permettre de chauffer une ligne après l'autre en appliquant un premier même potentiel au premier tronçon correspondant à la ligne dans le sens du tracé du serpentin et aux tronçons au-dessus et en appliquant un deuxième potentiel, de préférence différent du premier, aux tronçons en dessous.
- le circuit intégré est configuré pour laisser s'écouler une durée T entre deux alimentations de deux tronçons successifs, durée T pendant laquelle tous les tronçons sont mis au même potentiel.

Les avantages de l'invention sont multiples.

En ayant la possibilité de placer les vias tout autour de la matrice de pixels on peut plus facilement router les signaux vers la périphérie de la puce silicium ASIC placée en face inférieure, puisque les signaux viennent déjà des 4 côtés (par exemple en plaçant l'ASIC au centre du capteur).

Il est possible de tester la continuité du serpentin et donc de tester toutes les lignes de manière simplifiée.

Les contraintes sur la taille des vias sont relâchées, des vias plus gros que ceux utilisés habituellement peuvent être utilisés.

Ces vias sont en outre moins coûteux : les contraintes d'alignement entre les niveaux métalliques sont relâchées. Cela permet d'utiliser des substrats d'une stabilité dimensionnelle modérée et/ou présentant des dimensions plus grandes que ceux habituellement utilisés. Par exemple pour garantir un alignement à 30 µm sur une feuille de 300 mm de long, il faut utiliser un substrat ayant des déformations inférieures à 0,1 pour mille lors des étapes de réalisation de l'empilement, et en particulier les recuits. Ceci ne peut être réalisé que sur verre ou avec des polymères particulièrement stables (le plus souvent des polyimides stabilisés thermiquement) laminés sur des feuilles de verre. Si l'on relâche ces contraintes, on alors peut utiliser des substrats moins coûteux en PEN (PolyEthylène Naphtalate), Polylmide ou Polycarbonate par exemple, ou encore manipuler les films sans les coller sur une feuille de verre.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels, outre les figures 1 à 2 déjà discutées :
- les figures 3, 3' et 3" illustrent une matrice de pixels selon différents modes de réalisation de l'invention ;
- les figures 4 et 5 illustrent deux exemples d'agencement de vias et de lignes de routage d'un capteur selon l'invention ;
- la figure 6 illustre un empilement de couches d'un capteur selon l'invention.
Sur l'ensemble des figures les éléments similaires portent des références identiques.

### DESCRIPTION DETAILLEE DE L'INVENTION

Un capteur selon l'invention présente la même structure que celle en introduction et comprend un support S comprenant une surface inférieure S₀ et une surface supérieure S₁. Un tel support S est par exemple un substrat en PET ou PEN ou PI ou encore du type CIU (ABF, FR4) ou encore en verre.

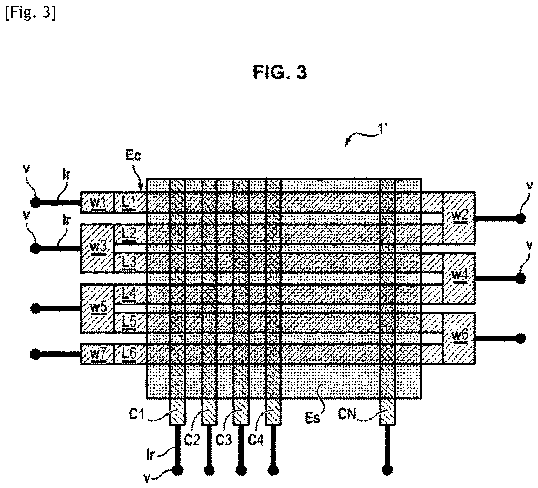

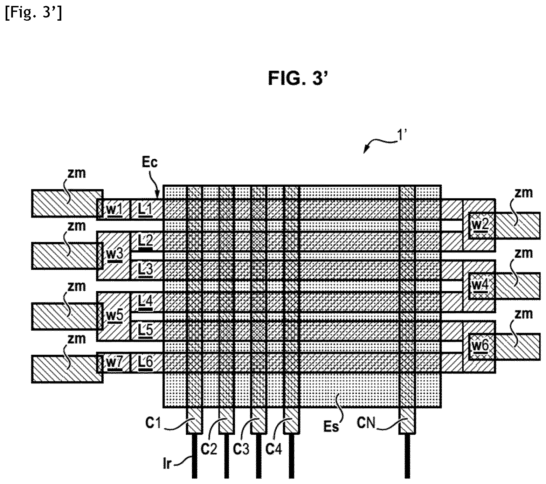

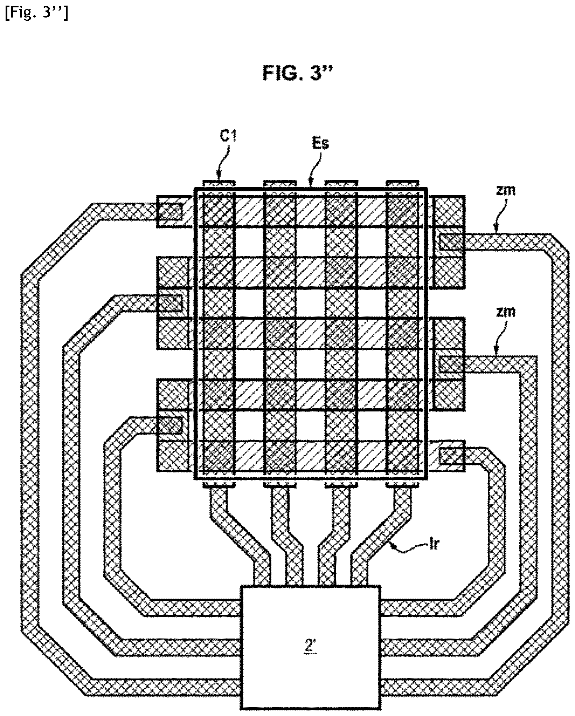

Sur la surface supérieure S₁ est disposée un élément sensible 1' dont une vue de dessus est illustré sur la **figure 3** et est constitué par une matrice de pixels comprenant plusieurs lignes et plusieurs colonnes de pixels.

Sur la surface inférieure S0 sont disposés un circuit intégré 2' tel qu'un ASIC, un élément 4 (optionnel) et éventuellement des contacts 3 permettant de connecter le capteur aux contacts d'une carte à puce lorsqu'un tel capteur est disposé sur une telle carte. Bien entendu, il peut être connecté à d'autres système (téléphone, terminal de contrôle d'accès, etc.).

L'invention ici décrite vise, notamment, à remplacer la matrice de pixels 1 des figures 1 et 2 par la matrice de pixels 1' qui va être ci-dessous décrite et ce, notamment, afin de faciliter la connexion de la matrice de pixels en évitant d'avoir des lignes de routage complexes. Une telle matrice de pixels 1' est illustrée sur la **figure 3****.**

La matrice illustrée sur la figure 3 comprend en particulier les éléments suivants.

Un élément thermique actif formé par un matériau thermosensible 20 disposé entre une couche inférieure 10 et une couche supérieure 30. De préférence l'élément thermique actif est une capacité pyroélectrique formée par un matériau pyroélectrique disposé entre une électrode inférieure c₁, c₂, c₃, c₄, c_{N} et une électrode supérieure, Es.

L'électrode inférieure c₁, c₂, c₃, c₄, c_{N} est constituée d'une pluralité de premières pistes en matériau électriquement conducteur qui s'étendent selon une première direction. Ces premières pistes forment des colonnes de pixels.

Un élément chauffant Ec qui forme un tracé en forme de serpentin et qui est constitué par une pluralité de deuxièmes pistes L1, L2, L3, L4, L5, L6 en matériau électriquement conducteur et des tronçons w1, w2, w3, w4, w5, w6 de connexion en matériau électriquement conducteur connectés aux extrémités des deuxièmes pistes L1, L2, L3, L4, L5, L6.

Les premières pistes L1, L2, L3, L4, L5, L6 s'étendent dans une deuxième direction, différente à la première direction et forment des lignes de pixels. De manière avantageuse, la deuxième direction est perpendiculaire à la première direction. En outre, comme on y reviendra plus loin, l'élément chauffant Ec est au-dessus du matériau pyroélectrique et n'est donc pas au niveau que celui de l'électrode inférieure c₁, c₂, c₃, c₄, c_{N}. En outre, les lignes sont ici droites mais cela n'est pas obligatoire, d'autres formes, par exemple en zig-zag peuvent être envisagées.

C'est le tracé en forme de serpentin de l'élément chauffant qui permet de faciliter la connexion.

En effet, ce serpentin est réalisé en connectant deux à deux les lignes, à l'exception des premières et dernières lignes de la matrice de pixels 1'.

En particulier, les lignes sont connectées à l'exception des première et dernière, par leurs extrémités respectives à une des extrémités d'une ligne précédente et d'une ligne suivante par l'intermédiaire des tronçons de connexion w1, w2, w3, w4, w5, w6, les première et dernière lignes ayant une extrémité libre connectée à un tronçon de connexion.

Par exemple sur l'exemple de la figure 3 :
- L'extrémité gauche de la ligne L1 est connectée seule à un tronçon w1 ;
- L'extrémité droite de la ligne L1 est connectée avec l'extrémité droite de la ligne L2 à un tronçon w2 ;
- L'extrémité gauche de la ligne L2 est connectée avec l'extrémité gauche de la ligne L3 à un tronçon w3 :
- L'extrémité droite de la ligne L3 est connectée avec l'extrémité droite de la ligne L4 à un tronçon w4 ;
- L'extrémité gauche de la ligne L4 est connecté avec l'extrémité gauche la ligne L5 à un tronçon w5 ;
- L'extrémité droite de la ligne L5 est connectée avec l'extrémité droite de la ligne L6 à un tronçon w6 ;
- L'extrémité gauche de la ligne L6 est connectée seule à un tronçon w7.

Ainsi, il apparaît que de chaque côté de la matrice, le pas entre deux tronçons adjacents est le double de celui des lignes. Par conséquent, la connexion de la matrice est donc facilitée car elle est moins dense que si toutes les lignes devaient être connectées. Ceci est vrai quel que soit le type de connexion retenu : contact avec les pistes de routage si celles-ci sont réalisées à un autre niveau (les besoins d'alignement et/ou de résolution de cet autre niveau sont relâchés) ou avec des vias vers un niveau métallique sur une face du substrat qui n'est pas celle directement en contact avec la matrice. S'agissant des colonnes c₁, c₂, c₃, c₄, c_{N}, elles sont quant à elles connectées chacune à des lignes de routages.

Sur la figure 3, les tronçons de connexion sont connectés à des lignes de routage Ir elles-mêmes connectées à des vias v qui sont de préférence alignés.

Toujours sur cette figure 3, les vias associés à chaque colonne sont du même côté de la matrice mais bien entendu, on peut prévoir qu'ils soient alternativement d'un côté ou de l'autre. Ou bien encore répartis de manière non régulière d'un côté ou de l'autre de la matrice en fonction des contraintes liées à la connexion de la matrice.

De cette façon les vias sont répartis de chaque côté de la matrice de pixels et non pas d'un seul côté comme cela pouvait être le cas notamment dans le cas de la matrice de pixels de la figure 2, où tous les vias étaient nécessairement du côté de l'extrémité libre de la ligne de chaque élément chauffant.

De manière alternative, comme cela est illustré sur les figures 3' et 3", le circuit intégré 2' est placé sur la même face que la matrice de pixels 1' et de préférence à côté de la matrice de pixels 1'. Dans ce cas, il est favorable que le circuit intégré 2' soit assemblé par technologie flip chip sur un niveau métallique unique, par exemple le niveau réalisant les colonnes (couche 10). Il est alors toujours nécessaire de réaliser des contacts entre le niveau métallique réalisant les lignes constituant l'élément chauffant (couche 50) et les tronçons de connexion et des lignes de routage situées sur la même couche que les colonnes (couche 10).

En remplacement des lignes de routage et des vias de la figure 3, on prévoit ici des éléments de routage zm situés sur la même couche que les colonnes c₂, c₃, c₄, c_{N} qui sont en contact avec les tronçons métalliques.

Une telle configuration permet de relâcher des contraintes sur les tolérances d'alignement qui sont inférieures que lorsque des lignes de routage et des vias sont utilisés.

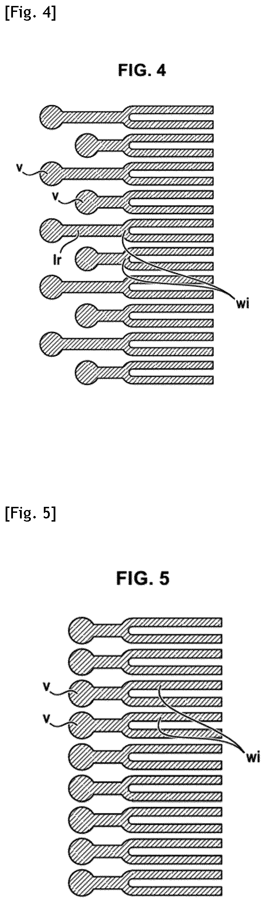

On a illustré sur la **figure 4****,** un exemple d'agencement des lignes de routage depuis les tronçons de connexion de l'élément chauffant et des vias qui s'étendent depuis les lignes de routage. Il y a une alternance de lignes de routage de dimension différentes, les vias sont quant à eux de dimensions identiques. Avec un tel agencement, on peut prévoir des vias d'un diamètre de 150 µm et des lignes de routage d'épaisseur 60 µm. En outre, la matrice présente typiquement un pas de 80 µm.

On a illustré sur la **figure 5** un autre exemple d'agencement sur lequel les vias ont un diamètre de 130 µm avec un espacement de 30 µm. A la différence de l'agencement de la figure 4 les vias sont alignés avec un pas de 160 µm, c'est-à-dire deux fois le pas de 80 µm des lignes de l'élément chauffant (épaisseur de 40 µm et espacement de 40 µm).

Afin de piloter les différentes lignes de l'élément chauffant pour les chauffer, il faut prévoir une logique de pilotage tenant compte de la connexion deux à deux des lignes. Pour ce faire, le circuit intégré est programmé pour mettre chacune des lignes à un potentiel nul ou +Vcc afin de permettre le chauffage d'une ou plusieurs lignes à la fois. En outre, entre deux chauffages de lignes, le circuit intégré est de préférence programmé pour laisser un temps de refroidissement qui est supérieur à la durée pendant laquelle les lignes sont chauffées. Pour ce faire, le circuit 2' intégré est configuré pour laisser s'écouler une durée T entre deux alimentations de deux tronçons successifs, durée T pendant laquelle tous les tronçons sont mis au même potentiel.

On décrit ci-après une logique de pilotage selon plusieurs configurations de chauffage.

Pour chauffer une seule ligne il faut que, dans le sens du tracé du serpentin, le premier tronçon correspondant à la ligne à chauffer soit à un premier potentiel (par exemple +Vcc) ainsi que les tronçons précédents tandis que les tronçons suivants soient à un deuxième potentiel (par exemple à la masse).

Selon cette logique il est donc possible de chauffer chaque ligne l'une après l'autre selon une sorte de vague de tension qui se propage selon le tracé du serpentin (de haut en bas sur la figure 3).

La logique peut être la suivante :
- arrêt : tout à la masse ;
- ligne L1 : w1 = Vcc, w2 w3 w4 w5 w6 w7 = masse ;
- ligne L2 : w1 w2 = Vcc, w3 w4 w5 w6 w7 = masse ;
- ligne L3 : w1 w2 w3 = Vcc, w4 w5 w6 w7 = masse ;
- ligne L4 : w1 w2 w3 w4 = Vcc, w5 w6 w7 = masse ;
- ligne L5 : w1 w2 w3 w4 w5 = Vcc, w6 w7 = masse ;
- ligne L6 : w1,2,3,4,5,6 = Vcc, w7 = masse ;
- arrêt : tout à la masse ou tout à Vcc.

Lorsque toutes les lignes sauf chauffées les unes après les autres, il peut être avantageux de laisser refroidir la ligne qui vient d'être chauffée avant de chauffer la suivante.

La logique peut donc être la suivante :
- arrêt : tout à la masse ;
- ligne L1 : w1 = Vcc, w2 w3 w4 w5 w6 w7 = masse pendant 1 ms (par exemple) ;
- arrêt : tout à la masse pendant 3 ms (par exemple) ;
- ligne L2 : w1 w2 = Vcc, w3 w4 w5 w6 w7 = masse ;
- arrêt : tout à la masse ;
- ligne L3 : w1 w2 w3 = Vcc, w4 w5 w6 w7 = masse ;
- arrêt : tout à la masse ;
- ligne L4 : w1 w2 w3 w4 = Vcc, w5 w6 w7 = masse ;
- arrêt : tout à la masse ;
- ligne L5 : w1 w2 w3 w4 w5 = Vcc, w6 w7 = masse ;
- arrêt : tout à la masse ;
- ligne L6 : w1 w2 w3 w4 w5 w6 = Vcc, w7 = masse ;
- arrêt : tout à la masse (on peut repasser à la ligne 1 pour recommencer).

L'ordre de chauffage des lignes n'est pas limitatif et il est possible de chauffer les lignes dans le désordre. Ceci est intéressant surtout dans le cas d'une matrice active (avec des éléments de sélection et/ou d'amplification dans chaque pixel). Pour chauffer plusieurs lignes à la fois, une logique peut être la suivante, s'agissant de chauffer les lignes L1 et L3 à la fois :
- w1 = Vcc ;
- w2 = masse ;
- w3 = masse ;
- w4 w5 w6 w7 = Vcc.

Selon cette logique on a un changement de tension aux bornes de toute la ligne qui doit chauffer. Ainsi, le point de départ est une extrémité (par exemple w1) avec une tension arbitraire (par exemple Vcc ou masse) et si la première doit être chauffée alors la tension pour le tronçon suivant est changée (w2 est à la masse si w1 est à Vcc par exemple) sinon la même tension est conservée et ainsi de suite pour les lignes suivantes.

Pour chauffer toutes les lignes à la fois on applique un premier même potentiel à tous les tronçons situés d'un même côté de la matrice de pixels et en appliquant un deuxième potentiel différent à tous les tronçons situés d'un même côté opposé à celui où est appliqué le premier même potentiel.

Par exemple, en relation avec la figure 3, on met tous les tronçons pairs (à droite) à Vcc, et tous les impairs (à gauche) à la masse.

Il est aussi possible de mettre dernier tronçon w7 à la masse et le premier tronçon w1 à Vcc (ou bien une tension plus élevée) en ayant pris soin de mettre tous les autres tronçons en « haute impédance », c'est-à-dire qu'aucun potentiel n'est appliqué (il faut utiliser des drivers 3 états : soit la masse, soit Vcc, soit rien (les 2 transistors de l'inverseur de sortie qui pilote les tronçons de connexion ne sont pas conducteurs).

Cette configuration permet de vérifier la continuité du serpentin et donc de toutes les lignes en une seule mesure (alors qu'avec la structure précédente de la figure 2, il convenait de tester chaque ligne).

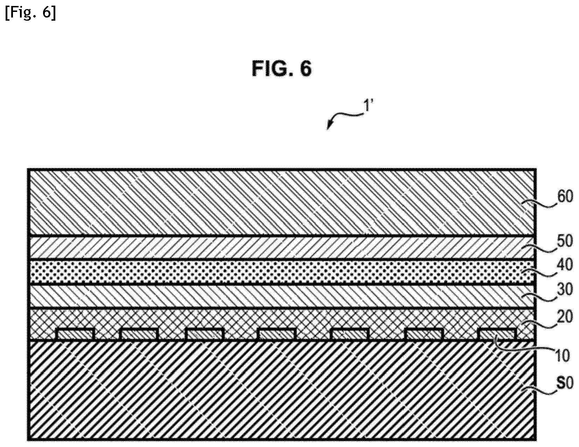

La matrice de ci-dessus présentée comprend, comme illustré sur la **figure 6****,** plusieurs couches successives, disposées sur la surface supérieure S1 du support S, qui est de préférence un substrat en PET, PEN, PI ou encore du type CIU (ABFn, FR4, ...) ou encore en verre.

Le support S présente une épaisseur comprise entre 75 et 200 µm lorsqu'il est en PET, PEN. Lorsqu'il est en PI, l'épaisseur du support S peut être comprise entre 20 et 100 µm, typiquement 25 µm. Lorsqu'il est en verre, l'épaisseur du support S est typiquement comprise entre 300 et 700 µm.

Une première couche 10 est constituée par un motif en matériau conducteur électrique (par exemple, Au, Ag, Al ou Cu) comportant les colonnes. Une deuxième couche 20 est constituée d'un matériau pyroélectrique composé d'un copolymère P(VDF-TrFE) (en anglais « Poly(vinylidene fluoride - co - trifluoroethylene)» pour copolymère de fluorure de vinylidène et de trifluoroéthylène) qui recouvre les colonnes de la première couche 10. La troisième couche 30 est en matériau conducteur électrique (par exemple, Au, Ag, Al ou Cu). La quatrième couche 40 est en matériau diélectrique. La cinquième couche 50 est constituée par un motif en matériau conducteur électrique dessinant l'élément chauffant (par exemple, Au, Ag, Al ou Cu). La sixième couche 60 est une couche de protection en matériau polymère (exemple acrylate ou siloxane) éventuellement chargé de particules inorganiques (ex : SiO2 ou TiO2), ou une couche inorganique comme du DLC (Diamond-like carbon), du SiO2 ou de l'Al2O3 ou un empilement de plusieurs couches. De manière avantageuse, les différentes couches présentent les épaisseurs suivantes :
Première couche 10 : inférieure à 1 µm, typiquement entre 50 nm et 250 nm ou bien comprise entre 3 µm et 15 µm.
Deuxième couche 20 : comprise entre 2 et 5 µm
Troisième couche 30 : inférieure à 1 µm, typiquement comprise entre 50 nm et 700 nm
Quatrième couche 40 : comprise entre 0,5 nm et 1,5 µm
Cinquième couche : comprise entre 50 nm et 3 µm ;
Sixième couche entre 1 et 25 µm ou 50 µm ou 100 µm.

Les deuxième, troisième, quatrième, cinquième et sixième couches sont considérées comme des couches minces compte tenu de leur épaisseur et permettent d'assurer un transfert rapide de la chaleur selon un axe vertical de la matrice. En outre, lorsque la couche présente une épaisseur inférieure à 1 µm alors cette couche est considérée comme mince ce qui facilite la réalisation de la matrice. La première couche 10 (électrode inférieure), la deuxième couche 20 et la troisième couche 30 (électrode supérieure) constituent la capacité pyroélectrique et la cinquième couche 50 constitue l'élément chauffant.

De manière alternative, les troisième et cinquième couche peuvent être échangées ou alors confondues (dans ce cas la quatrième couche 40 entre les deux est supprimée).

Bien entendu, la matrice et le capteur ici décrits ne sont pas limités à ceux basés sur le PVDF mais peuvent être adaptés à d'autres types de capteur thermiques.

## Revendications

1. Capteur de motif thermique comportant :
- un support (S) ;
- une matrice (1') de pixels disposée sur le support (S) ;
- un circuit intégré (2') disposé sous le support (S), la matrice de pixels comprenant plusieurs lignes et plusieurs colonnes de pixels, ladite matrice comprenant :
- un élément thermique actif (10, 20, 30) formé par un matériau thermosensible (20) disposé entre une couche inférieure (10, c₁, c₂, c₃, c₄, c_{N}) et une couche supérieure (30, Es), la couche inférieure (10, c₁, c₂, c₃, c₄, c_{N}) étant constituée d'une pluralité de premières pistes en matériau électriquement conducteur et s'étendant selon une première direction, lesdites premières pistes formant des colonnes de pixels ;
- un élément chauffant (50), disposé sur l'élément thermique actif (10, 20, 30) et formant un tracé en forme de serpentin, ledit élément chauffant étant constitué par une pluralité de deuxièmes pistes (L1, L2, L3, L4, L5, L6) en matériau électriquement conducteur et est également constitué de tronçons (w1, w2, w3, w4, w5, w6) de connexion en matériau électriquement conducteur connectées aux extrémités des deuxièmes pistes (L1, L2, L3, L4, L5, L6), les tronçons de connexion connectant des deuxième pistes (L1, L2, L3, L4, L5, L6) entre elles, lesdites deuxièmes pistes (L1, L2, L3, L4, L5, L6) s'étendant dans une deuxième direction différente de la première direction et formant des lignes de pixels, les deuxièmes pistes étant connectées à l'exception des première et dernière deuxième pistes (L1, L2, L3, L4, L5, L6), par leurs extrémités respectives à une des extrémités d'une deuxième piste précédente et d'une deuxième piste suivante par l'intermédiaire dédits tronçons (w1, w2, w3, w4, w5, w6) de connexion, la première et dernière deuxième pistes ayant une extrémité libre connectée à un tronçon de connexion, ledit circuit intégré (2') étant connecté à la matrice (1') de pixels par des lignes de routage (Ir, zm) en matériau électriquement conducteur s'étendant depuis chacun des tronçons.

2. Capteur de motif thermique selon la revendication 1, dans laquelle la deuxième direction est perpendiculaire à la première direction.

3. Capteur de motif thermique selon l'une des revendications précédentes, comprenant les couches successives suivantes, déposées sur un substrat (S),
- une première couche (10) en matériau électriquement conducteur comprenant les premières pistes constituant une première électrode ;
- une deuxième couche (20) en matériau thermosensible recouvrant les premières pistes et laissant libre au moins une partie des premières pistes ;
- une troisième couche (30) en matériau électriquement conducteur superposée à la deuxième couche, ladite troisième couche constituant une deuxième électrode ;
- une quatrième couche (40) en matériau diélectrique superposée à la troisième couche ;
- une cinquième couche (50) en matériau électriquement conducteur comprenant l'élément chauffant constituée par la pluralité de deuxièmes pistes et les tronçons de connexion ;
- une sixième couche (60) de protection.

4. Capteur de motif thermique selon l'une des revendications précédentes, dans lequel l'élément thermique actif est une capacité pyroélectrique, ledit matériau thermosensible étant un matériau pyroélectrique (20).

5. Capteur de motif thermique selon l'une des revendications 1 à 3, dans laquelle l'élément thermique actif est constitué de diodes ou de thermistances.

6. Capteur de motif thermique selon la revendication 5, dans lequel les lignes de routage (Ir) et les tronçons de connexion sont disposés sur des couches différentes, le contact entre les lignes de routage et les tronçons de connexion étant réalisé par des vias.

7. Capteur de motif thermique selon la revendication 5, dans lequel les lignes de routage et les tronçons de connexion sont réalisés sur la même couche.

8. Capteur de motif thermique selon l'une des revendications 5 à 7, dans lequel le circuit (2') intégré est configuré pour mettre chacune des lignes de routage à un potentiel nul, c'est-à-dire à la masse, ou +Vcc afin de permettre le chauffage d'une ou plusieurs deuxième pistes à la fois.

9. Capteur de motif thermique selon l'une des revendications 5 à 7, dans lequel le circuit (2') intégré est configuré pour permettre de chauffer une ligne après l'autre en appliquant un premier même potentiel au premier tronçon correspondant à la ligne dans le sens du tracé du serpentin et aux tronçons au-dessus et en appliquant un deuxième potentiel, de préférence différent du premier, aux tronçons en dessous.

10. Capteur de motif thermique selon la revendication 9, dans lequel le circuit (2') intégré est configuré pour laisser s'écouler une durée T entre deux alimentations de deux tronçons successifs, durée T pendant laquelle tous les tronçons sont mis au même potentiel.

## Patentansprüche

1. Thermischer Mustersensor, umfassend:
- eine Halterung (S);
- eine Matrix (1') aus Bildpunkten, die auf der Halterung (S) angeordnet ist;
- einen integrierten Schaltkreis (2'), der unter der Halterung (S) angeordnet ist, wobei die Matrix aus Bildpunkten mehrere Zeilen und mehrere Spalten von Bildpunkten umfasst, und die Matrix Folgendes umfasst:
- ein aktives thermisches Element (10, 20, 30), das aus einem thermisch empfindlichen Material (20) gebildet ist, das zwischen einer unteren Schicht (10, c₁, c₂, c₃, c₄, c_{N}) und einer oberen Schicht (30, Es) angeordnet ist, wobei die untere Schicht (10, c₁, c₂, c₃, c₄, c_{N}) aus einer Vielzahl von ersten Bahnen aus elektrisch leitendem Material besteht und sich in einer ersten Richtung erstreckt, wobei die ersten Bahnen Säulen aus Bildpunkten bilden;
- ein auf dem aktiven thermischen Element (10, 20, 30) angeordnetes und ein schlangenförmiges Muster bildendes Heizelement (50), wobei das Heizelement aus einer Vielzahl von zweiten Leiterbahnen (L1, L2, L3, L4, L5, L6) aus elektrisch leitendem Material besteht und auch aus Verbindungsabschnitten (w1, w2, w3, w4, w5, w6) aus elektrisch leitendem Material besteht, die mit den Enden der zweiten Bahnen (L1, L2, L3, L4, L5, L6) verbunden sind, wobei die Verbindungsabschnitte zweite Bahnen (L1, L2, L3, L4, L5, L6) miteinander verbinden, und die zweiten Bahnen (L1, L2, L3, L4, L5, L6) sich in einer zweiten Richtung erstrecken, die sich von der ersten Richtung unterscheidet, und Bildpunktlinien bilden, wobei die zweiten Bahnen mit Ausnahme der ersten und letzten zweiten Bahn (L1, L2, L3, L4, L5, L6) mit ihren jeweiligen Enden mit einem der Enden einer vorhergehenden zweiten Bahn und einer nachfolgenden zweiten Bahn über die genannten Verbindungsabschnitte (w1, w2, w3, w4, w5, w6) verbunden sind, wobei die erste und die letzte zweite Bahn ein freies Ende haben, das mit einem Verbindungsabschnitt verbunden ist, und der integrierte Schaltkreis (2') mit der Matrix (1') aus Bildpunkten über Routingleitungen (lr, zm) aus elektrisch leitendem Material verbunden ist, die sich von jedem der Abschnitte aus erstrecken.

2. Thermischer Mustersensor nach Anspruch 1, wobei die zweite Richtung senkrecht zur ersten Richtung ist.

3. Thermischer Mustersensor nach einem der vorhergehenden Ansprüche, der die folgenden aufeinanderfolgenden Schichten umfasst, die auf einem Substrat (S) aufgebracht sind,
- eine erste Schicht (10) aus elektrisch leitendem Material mit den ersten Bahnen, die eine erste Elektrode bilden;
- eine zweite Schicht (20) aus thermisch empfindlichem Material, die die ersten Bahnen bedeckt und mindestens einen Teil der ersten Bahnen frei lässt;
- eine dritte Schicht (30) aus elektrisch leitendem Material, die der zweiten Schicht aufliegt, wobei die dritte Schicht eine zweite Elektrode bildet;
- eine vierte Schicht (40) aus einem dielektrischen Material, die der dritten Schicht aufliegt;
- eine fünfte Schicht (50) aus elektrisch leitendem Material, die das Heizelement umfasst, das aus der Vielzahl von zweiten Bahnen und den Verbindungsabschnitten besteht;
- eine sechste schützende Schicht (60).

4. Thermischer Mustersensor nach einem der vorhergehenden Ansprüche, bei dem das aktive thermische Element eine pyroelektrische Kapazität aufweist, wobei das thermisch empfindliche Material ein pyroelektrisches Material (20) ist.

5. Thermischer Mustersensor nach einem der Ansprüche 1 bis 3, wobei das aktive thermische Element aus Dioden oder Heißleitern besteht.

6. Thermischer Mustersensor nach Anspruch 5, bei dem die Routingleitungen (lr) und die Verbindungsabschnitte auf unterschiedlichen Schichten angeordnet sind, wobei der Kontakt zwischen den Routingleitungen und den Verbindungsabschnitten durch Durchlässe hergestellt wird.

7. Thermischer Mustersensor nach Anspruch 5, bei dem die Routingleitungen und die Verbindungsabschnitte auf derselben Schicht hergestellt werden.

8. Thermischer Mustersensor nach einem der Ansprüche 5 bis 7, bei dem der integrierte Schaltkreis (2') so konfiguriert ist, dass er jede der Routingleitungen auf ein Nullpotential, d. h. auf Masse, oder +Vcc setzt, um die Erwärmung einer oder mehrerer zweiter Bahnen zu einem Zeitpunkt zu ermöglichen.

9. Thermischer Mustersensor nach einem der Ansprüche 5 bis 7, bei dem der integrierte Schaltkreis (2') so konfiguriert ist, dass er das Erhitzen einer Linie nach der anderen ermöglicht, indem er ein erstes gleiches Potenzial an den ersten Verbindungsabschnitt, der der Linie in Richtung des Verlaufs der Schlangenlinie entspricht, und an die darüber liegenden Verbindungsabschnitte anlegt und ein zweites Potential, das sich vorzugsweise von dem ersten Potential unterscheidet, an die darunter liegenden Verbindungsabschnitte anlegt.

10. Thermischer Mustersensor nach Anspruch 9, bei dem der integrierte Schaltkreis (2') so konfiguriert ist, dass er zwischen der Versorgung zweier aufeinanderfolgender Verbindungsabschnitte eine bestimmte Zeitspanne T verstreichen lässt, wobei während dieser Zeitspanne T alle Verbindungsabschnitte auf dasselbe Potential gesetzt werden.

## Claims

1. Thermal pattern sensor comprising:
- a support (S);
- a matrix (1') of pixels arranged on the support (S);
- an integrated circuit (2') disposed under the support (S), the matrix of pixels comprising a plurality of rows and a plurality of columns of pixels, said matrix comprising:
- an active thermal element (10, 20, 30) formed by a thermosensitive material (20) disposed between a lower layer (10, c₁ , c₂ , c₃ , c₄ , c_{N} ) and an upper layer (30, Es), the lower layer (10, c₁ , c, c₂₃ , c₄ , c_{N}) consisting of a plurality of first tracks made of electrically conductive material and extending in a first direction, the said first tracks forming columns of pixels;
- a heating element (50) disposed on the active thermal element (10, 20, 30) and forming a serpentine path, said heating element being constituted by a plurality of second tracks (L1, L2, L3, L4, L5, L6) of electrically conductive material and is also constituted by connection sections (w1, w2, w3, w4, w5, w6) of electrically conductive material connected to the ends of the second tracks (L1, L2, L3, L4, L5, L6), the connection sections connecting second tracks (L1, L2, L3, L4, L5, L6) to one another, said second tracks (L1, L2, L3, L4, L5, L6) extending in a second direction different from the first direction and forming lines of pixels, the second tracks being connected, with the exception of the first and last second tracks (L1, L2, L3, L4, L5, L6), by their respective ends to one of the ends of a preceding second track and a following second track via said connecting sections (w1, w2, w3, w4, w5, w6), the first and last second tracks having a free end connected to a connection section, said integrated circuit (2') being connected to the matrix (1') of pixels by routing lines (Ir, zm) of electrically conductive material extending from each of the sections.

2. The thermal pattern sensor of claim 1, wherein the second direction is perpendicular to the first direction.

3. The thermal pattern sensor according to one of the preceding claims, comprising the following successive layers deposited on a substrate (S),
- a first layer (10) of electrically conductive material comprising first tracks constituting a first electrode;
- a second layer (20) of heat-sensitive material covering the first tracks and leaving at least part of the first tracks free;
- a third layer (30) of electrically conductive material superimposed on the second layer, said third layer constituting a second electrode;
- a fourth layer (40) of dielectric material superimposed on the third layer;
- a fifth layer (50) of electrically conductive material comprising the heating element constituted by the plurality of second tracks and the connection sections;
- a sixth protective layer (60).

4. The thermal pattern sensor according to any of the preceding claims, wherein the active thermal element is a pyroelectric capacitor, said thermosensitive material being a pyroelectric material (20).

5. The thermal pattern sensor according to any of claims 1 to 3, wherein the active thermal element consists of diodes or thermistors.

6. The thermal pattern sensor according to claim 5, wherein the routing lines (Ir) and the connection sections are arranged on different layers, the contact between the routing lines and the connection sections being made by vias.

7. The thermal pattern sensor according to claim 5, in which the routing lines and connection sections are made on the same layer.

8. The thermal pattern sensor according to one of claims 5 to 7, wherein the integrated circuit (2') is configured to set each of the routing lines to zero potential, i.e., earth, or +Vcc in order to allow heating of one or more second tracks at a time.

9. The thermal pattern sensor according to one of claims 5 to 7, in which the integrated circuit (2') is configured to enable one line to be heated after the other by applying a first same potential to the first section corresponding to the line in the direction of the outline of the coil and to the sections above it and by applying a second potential, preferably different from the first, to the sections below it.

10. The thermal pattern sensor as claimed in claim 9, in which the integrated circuit (2') is configured to allow a time T to elapse between two power supplies to two successive sections, during which time T all the sections are at the same potential.
